# EUROPÄISCHE PATENTSCHRIFT

(11) **EP 1 273 817 B1**
(45) Veröffentlichungstag und Bekanntmachung des Hinweises auf die Patenterteilung: **06.05.2009**
(21) Anmeldenummer: 02012959.9
(22) Anmeldetag: 12.06.2002
(51) Int. Cl.: F16D 69/02, C04B 41/51, F16D 65/12

(54) **Verfahren zur Herstellung eines faserverstärkten, wenigstens im Randbereich aus einer Metall-Verbundkeramik bestehenden Werkstoffs**
Process for the manufacture of a fibre reinforced material consisting at least on the peripheral area of a metal-ceramic composite material
Procédé pour fabriquer un matériau renforcé par des fibres constituées, au moins à sa périphérie, de composite métal-céramique

(30) Priorität: 30.06.2001 DE 10131758
(43) Veröffentlichungstag der Anmeldung: 08.01.2003
(73) Patentinhaber: AUDI AG, 85045 Ingolstadt (DE)
(72) Erfinder: Christ, Martin, Dr., 86517 Wehringen (DE); Heine, Michael, Dr., 86695 Allmannshofen (DE); Kienzle, Andreas, Dr., 86672 Thierhaupten (DE); Zimmermann-Chopin, Rainer, Dr., 86679 Ellgau (DE)
(74) Vertreter: Deckers, Hellmuth Alexander

(56) Entgegenhaltungen:
- EP-A- 0 612 930
- EP-A- 1 084 997
- DE-A- 4 322 113
- GB-A- 2 249 558

## Beschreibung

Die Erfindung bezieht sich auf ein Verfahren zur Herstellung eines faserverstärkten Verbundwerkstoffs, der wenigstens im Randbereich aus einer Metall-Verbundkeramik besteht, deren Matrix die Elemente Si und C enthält, sowie auf nach diesem Verfahren hergestellte Formkörper zur Verwendung als Bremsscheiben, Bremsbeläge oder Kupplungsscheiben.

Im folgenden und in den Ansprüchen sind unter dem Begriff Fasern sowohl einzelne Fasern als auch Faserbündel, die durch Polymere oder deren Pyrolyseprodukte gebunden sein können, zu verstehen.

Aus dem Dokument EP 1 084 997 A2 ist die Herstellung von C/SiC-Werkstoffen mit unterschiedlichen Längenbereich von Fasern bekannt.

In dem Dokument GB 2 249 558 A wird ein Metall-Matrix-Verbundwerkstoffmit einer kontinuierlichenPhase aus Metall (Aluminium oder Legierungen von Aluminium) und einer dispersen Phase aus Hartpartikeln wie Siliciumcarbid, Borcarbid oder Aluminiumoxid beschrieben, der mit einer zusammenhängenden Schicht aus Metall, einem Verbundwerkstoff, einem hochtemperaturbeständigen Werkstoff oder einer Keramik beschichtet ist.Diese bewirkt einen Schutz der Hartpartikel vor Abrieb.

Das Dokument EP 0 612 930 A1 offenbart eine Scheibenbremse umfassend einen mit Schichten aus Leichtmetall und einer Oxidkeramik beschichteten Reibwerkstoffblock aus mit Fasern aus Kohlenstoff verstärktem Kohlenstoff. Diese Schichten werden in einem Schmelzspritzverfahren aufgebracht.

Aus dem Dokument DE 43 22113 A1 schließlich ist ein mehrschichtiger Aufbau einer Bremsscheibe aus wenigstens zwei unterschiedlichen Werkstoffen bekannt, wobei ein Werkstoff ein reiner Keramikwerkstoff ist, und der oder die anderen Werkstoffe ausgewählt sind aus Metall-, Metall-Sinter- und Metall-Keramik-Sinter-Werkstoffen.

Gattungsgemäße Verfahren zur Herstellung der faserverstärkten Verbundkeramik sind beispielsweise aus der DE 198 56 721 A1, DE 19711 829 C1 und der DE 197 10 105 A1 bekannt und umfassen unter anderem die folgenden Schritte :
a) Herstellen einer Mischung aus kohlenstoffhaltigen Fasern, die mit einer Beschichtung überzogen worden sein können, einerseits und Füllmitteln und/oder Bindemitteln wie beispielsweise Harz und/oder Pech andererseits,
b) Formgebung der Mischung unter Druck und/oder Temperatur und Pyrolyse oder Graphitierung zur Herstellung eines Formkörpers, insbesondere eines aus kohlenstoffaserverstärktem Kohlenstoff bestehenden Formkörpers (CFC),
c) Infiltrieren zumindest einer Randschicht des Formkörpers mit einer Silizium-Schmelze und partielle Reaktion des Formkörperkohlenstoffs zu SiC zur Herstellung eines Formkörpers, der wenigstens in der Randschicht aus einer Verbundkeramik mit in einer Matrix aus SiC, Si und C eingebetteten, kohlenstoffhaltigen Fasern besteht (C/SiC).

Zu den üblichen Herstellungsverfahren gehören auch diejenigen, bei denen die Matrix des Schrittes c) durch eine Gasphaseninfiltration (CVD, oder CVI) oder durch die Pyrolyse von Si-haltigen präkeramischen Polymeren erzeugt wird, so dass der Formkörper aus einer Verbundkeramik mit in einer Matrix aus SiC, Si und C eingebetteten, kohlenstoffhaltigen Fasern besteht (C/SiC).
Der SiC-Gehalt in der Matrix der Verbundkeramik liegt üblicherweise oberhalb 25%, bevorzugt oberhalb 50%. Je nach Tiefe der Infiltration mit den matrixbildenden Verbindungen kann sich diese Verbundkeramik nur auf eine Randschicht beschränken, oder auch durch den gesamten Formkörper ziehen. Der Gewichtsanteil der Matrix und deren Zusammensetzung können dabei innerhalb des Formkörpers variieren, insbesondere in der Tiefe, wobei der Gewichtsanteil der Matrix an der Oberfläche bevorzugt höher liegt als im inneren des Formkörpers, mitunter auch bei nahezu 100%.
Dabei ist der Temperaturausdehnungskoeffizient der Matrix in der Regel höher als derjenige der Fasern. Die beschriebene Flüssigsilizierung, Gasphaseninfiltration oder Polymerpyrolyse des aus kohlenstofffaserverstärktem Kohlenstoff (CFC-Werkstoff) bestehenden Formkörpers findet bei hohen Temperaturen statt, wobei nach dem Abkühlen auf Raumtemperatur sich aufgrund der unterschiedlichen Temperaturausdehnungskoeffizienten von Fasern und Matrix im Werkstoff und insbesondere in unmittelbarer Nachbarschaft der Fasern offene Poren und Risse ausbilden, die sich bis weit in die Tiefe der Verbundkeramik erstrecken.
Dieser Effekt tritt besonders dann auf, wenn die SiC-haltige Randschicht einen höheren Gewichtsanteil der Matrix als das Innere des Werkstoffes hat.
Diese offenen Risse und Poren bilden Pfade für eindringenden Sauerstoff, so dass insbesondere die in der Matrix gebundenen Kohlenstofffasern bzw. der gebundene Kohlenstoff der Oxidation ausgesetzt sind. Werkstoffanwendungen im Hochtemperaturbereich, wie sie für derartige Werkstoffe üblich sind, verstärken den oxidativen Angriff weiter.

### Aufgabe

Der Erfindung liegt demgegenüber die Aufgabe zugrunde, ein Verfahren zur Herstellung der obigen Verbundwerkstoffe weiter zu entwickeln, dass der oxidative Angriff der Werkstoffe zumindest verringert wird. Hierbei sollte die Herstellung des Werkstoffs in der Weise erfolgen, daß das Verfahren gegenüber der bisherigen Herstellung nicht wesentlich größeren Aufwand in Form von Kosten und Zeit verursacht.

Diese Aufgabe wird erfindungsgemäß durch die kennzeichnenden Merkmale des Anspruchs 1 gelöst.

Mit dem vorgestellten Verfahren ist es möglich, die herstellverfahrensbedingten offenen Poren und Risse in der faserverstärkten Verbundkeramik mit Metallen aufzufüllen und dadurch das Eindringen von für die Oxidation verantwortlichen Stoffen zu verhindern. Die Erfindung nutzt dabei gezielt die verbesserte elektrische Leitfähigkeit der Fasern gegenüber der elektrischen Leitfähigkeit der SiC und Silizium enthaltenden Matrix, da beim galvanischen Verfahren die Abscheidung des Metalls insbesondere am Material mit der höheren elektrischen Leitfähigkeit und daher bevorzugt in den offenen Rissen und Poren stattfindet, welche sich in unmittelbarer Nachbarschaft zu den Fasern und Faserbündeln befinden. Auf diese Weise werden die oxidationsgefährdeten Fasern von einer metallischen Korrosionsschutzschicht umgeben, welche eindringenden Sauerstoff bindet.

Bei Anwendung des galvanischen Verfahrens bei silizierten Verbundkeramiken findet die metallische Abscheidung zunächst nicht an der Oberfläche statt, sondern zunächst in den tiefergelegenen offenen Poren und Rissen, wodurch diese durch das abgeschiedene Metall verschlossen werden, so dass die spezifischen Nachteile, welche eine Flüssiginfiltration von Silizium mit sich bringt, kompensiert werden. Dies gilt ebenso für die artverwandten Verbundkeramiken, deren SiC-haltige Matrix durch Gasphaseninfiltration (CVD oder CVI) oder Polymerpyrolyse erzeugt wurde. Außerdem werden galvanisch abgeschiedene Metalle in der C/SiC-Matrix mikrodispers eingelagert. Hierdurch entsteht eine starke mechanische Verzahnung der beiden Werkstoffe, insbesondere liefert das in der Matrix abgeschiedene Metall eine gute Anbindungsmöglichkeit für eine eventuell zusätzlich vorzusehende metallische Deckschicht. Infolgedessen sinkt auch die Tendenz, dass die metallische Deckschicht bei Temperaturbelastung abplatzt.
Hierbei kann die Dicke der Schicht, in der das Metall abgeschieden wird, kleiner, größer oder gleich der Dicke der SiC-haltigen Randschicht sein. Üblicherweise ist die Dicke der Schicht, in der das Metall abgeschieden wird, kleiner 10 mm, bevorzugt kleiner 5mm und besonders bevorzugt kleiner 0,5 mm.

Die vorgeschlagene galvanische Abscheidung von Metallen in Verbundkeramiken ist insofern auch besonders vorteilhaft, als es auf andere Weise schwierig ist, Metalle und Legierungen mit Schmelztemperaturen oberhalb der Prozesstemperatur der Siliziumflüssiginfiltration in die faserverstärkte Keramik einzulagern, oder geeignete Metalle und Legierungen mit Schmelzpunkt unterhalb der Prozesstemperatur zu finden. Ein wesentlicher Vorteil gegenüber Verfahren, bei denen Metalle oberhalb ihres Schmelzpunktes und zumeist unter Druck flüssiginfiltriert werden, besteht darin, dass bei dem erfindungsgemäßen Prozess die Metallabscheidung bei Raumtemperatur stattfindet, bei welcher die Risse wesentlich stärker aufgeweitet sind als bei den hohen Temperaturen der Metallschmelzen. In vorteilhafter Weise können hierdurch die offenen Poren und Risse aufgefüllt werden und weiten sich durch Abkühlung nicht mehr wie nach dem Flüssiginfiltrieren wieder auf. Das beim letzteren Verfahren zu beobachtende Schrumpfen des Metalls durch Abkühlungskontraktion findet daher nicht statt.

Falls nach dem erfindungsgemäßen Verfahren Formkörper gefertigt werden, bei welchen der Reibwert relevant ist, wie beispielsweise bei Bremsscheiben, Bremsbelägen oder Kupplungsscheiben, kann abhängig von der Art und Menge des durch galvanische Abscheidung in das Gefüge eingelagerten Metalls und/oder von der Dicke der metallischen Deckschicht der künftige Reibwert der Oberfläche des Formkörpers gezielt eingestellt werden. Dies gilt insbesondere dann, wenn in oder auf der Verbundkeramik Kupfer oder eine Kupferlegierung abgeschieden wird.

Vorteilhafte Ausgestaltungen der Erfindung sind in den Unteransprüchen aufgeführt.

Zu den faserverstärkten Verbundkeramiken zählen im besonderen die Klasse der C/SiC-Werkstoffe, bei welchen kohlenstoffbasierte Fasern, insbesondere Kohlenstofffasern oder Graphitfasern, in einer überwiegend aus SiC, Si und C gebildeten Matrix gebunden sind. Die Vorgehensweise zur Herstellung von C/SiC-Werkstoff nach dem erfindungsgemäßen Verfahren ist dadurch gekennzeichnet, dass zunächst ein CFC-Körper in bekannter Weise gebildet wird, der anschließend durch eine Flüssiginfiltration mit Silizium, oder einer Siliziumlegierung, in C/SiC umgewandelt wird, wie bereits oben beschrieben. Als Bestandteile der Siliziumlegierung werden üblicherweise die Metalle der Nebengruppen I bis VIII verwendet, insbesondere Ti, Cr, Fe, und Ni.
Die C/SiC-Verbundkeramiken können auch Fasern umfassen, die neben Kohlenstoff noch weitere Elemente, wie beispielsweise Si, B, N, O oder Ti enthalten. Diese Fasern sind hochtemperaturbeständig und besitzen eine gegenüber der gebildeten Matrix signifikant höhere elektrische Leitfähigkeit. Dies wird insbesondere durch kohlenstoffhaltige Fasern in einer SiC- oder Si/SiC-Matrix gewährleistet. Das Basismaterial ist indessen nicht auf CFC-Werkstoffe beschränkt. Als Fasermaterial können ebenso auch schlechtleitende Keramikfasern, insbesondere auf der Basis von SiO₂, Al₂O₃, ZrO₂, oder SiC, die mit Kohlenstoff oder Graphit beschichtet wurden, verwendet werden. Zur Herstellung der Matrix können auch Precursorkeramiken verwendet werden, wie sie zum Beispiel durch die Pyrolyse von Polymeren entstehen, die eines oder mehrere der Elemente Si, B, C, N, P oder Ti enthalten. Die Matrix kann aber auch ganz oder teilweise über eine Gasphaseninfiltration erzeugt werden. Üblicherweise weist die Matrix bei der Erzeugung über das Gasphasenverfahren einen relativ hohen SiC-Gehalt auf, bevorzugt über 80% und besonders bevorzugt nahezu 100%.

Ein CFC-Werkstoff wird durch Flüssigsilizierung in C/SiC umgewandelt. Dabei spielt es keine Rolle, ob der CFC-Werkstoff ganz oder nur teilweise mit Silizium oder Siliziumlegierung infiltriert und zu C/SiC umgesetzt wird. Erfindungsgemäß muss lediglich die Randschicht zu C/SiC, welche auch zu nahezu 100% aus der Matrix bestehen kann, umgesetzt worden sein. Die Erfindung erstreckt sich daher auch auf CFC-Körper, bei denen eine Silizierung lediglich im Randbereich durchgeführt wurde, aber der Kern aus CFC bestehen bleibt. Die Dicke der zu C/SiC umgesetzten Randschicht beträgt mindestens 0,2 mm, vorzugsweise mehr als 0,5 mm und besonders bevorzugt mehr als 5 mm.

Die Flüssigsilzierung von CFC führt nach dem Abkühlen des Werkstoffs von einer Prozesstemperatur von etwa 1500-1900°C auf Raumtemperatur aufgrund der unterschiedlichen Temperaturausdehnungskoeffizienten von Fasern und Matrix zu einer mit offenen Mikrorissen und Poren durchsetzten Matrix, wobei sich die offenen Risse und Poren bis weit in die Tiefe der C/SiC-Keramik erstrecken und sich bevorzugt an den Verstärkungsfasern ausbilden.

Erfindungsgemäß wird anschließend die faserverstärkte Verbundkeramik, insbesondere die C/SiC-Keramik, in ein Galvanikbad eines Metallsalzes oder einer Metallsalzmischung getaucht und eine Gleichspannung angelegt, die einen Abscheidestrom hervorruft. Die galvanische Abscheidung des Metalles beginnt in den Rissen und Poren bevorzugt an den kohlenstoffreichen Bereichen und insbesondere an den elektrisch gut leitenden Kohlenstofffasern. Bezogen auf die Dicke der Verbundkeramik beginnt die galvanische Abscheidung des Metalls zuerst an den von deren Oberfläche entfernt gelegenen offenen Rissen und Poren und setzt sich dann zur Oberfläche hin fort. Die Abscheidung des Metalls kann nach dem Füllen der offenen Risse und Poren beendet oder fortgeführt werden, bis sich eine zusammenhängende, die gesamte Werkstoffoberfläche bedeckende Metallschicht ausbildet.

Infolgedessen kann das Metall sehr tief in den C/SiC-Werkstoff eindringen und erfährt hierdurch eine starke Verankerung. Da der thermische Ausdehnungskoeffizient des Metalls größer ist als derjenige der Verbundkeramik, führen die unter Anwendungsbedingungen des C/SiC-Werkstoffs vorherrschenden hohen Temperatur von bis zu 900°C zu einer gegenüber der Verbundkeramik größeren thermischen Ausdehnung des Metalls, was die Verankerung des abgeschiedenen Metalls in der Keramik weiter verstärkt.

Das abgeschiedene Metall oder die abgeschiedene Metalllegierung füllt zumindest einen Teil der offenen Risse und Poren des Verbundwerkstoffes, die als Oxidationspfade wirken, zumindest in einem bestimmten Teil der Risse und Poren vollständig und dicht aus.

Bevorzugt werden Metalle mit hoher Duktilität und geringer chemischer Affinität gegenüber Kohlenstoff- oder kohlenstoffhaltigen oder kohlenstoffbeschichteten Fasern, sowie gegenüber der Matrix des Verbundwerkstoffes galvanisch abgeschieden. Hierzu zählen beispielsweise die Übergangsmetalle der Cr, Mn, Fe ,Co, Ni, und Cu-Gruppe. Besonders bevorzugt werden Cu, Zn, Sn, Ni, Pt, Ti, Ag und Au sowie deren Legierungen verwendet.

Weiterhin werden bevorzugt Metalle zum Schutz vor oxidativem Angriff ausgewählt, die sauerstoffbindend wirken, insbesondere bei Anwendungstemperaturen oberhalb 600°C. Durch die Aufnahme von Sauerstoff und die Bildung von Metalloxiden wird der weitere Durchtritt der Luft zu den oxidationsempfindlichen Bereichen der C/SiC-Keramik behindert, zu welchen insbesondere die kohlenstoffhaltigen Verstärkungsfasern zählen. Besonders günstig sind dabei Metalle, die unterhalb von ca. 1100°C unter Volumenzunahme eine Oxidschicht ausbilden, die fest am metallischen Grund haftet. Die Oxidschicht tritt dann als Diffusionssperrschicht für Sauerstoff auf, so dass der Zutritt von Sauerstoff auf die innenliegenden, kohlenstofffaserhaltigen Bereiche verhindert wird.

Besonders bevorzugt wird Cu abgeschieden, so dass sich an der Oberfläche der Verbundkeramik eine fest haftende CuO/Cu₂O-Schicht ausbilden kann. Die Art des abgeschiedenen Metalls wird unter anderem abhängig von der künftigen Anwendungstemperatur der Verbundkeramik gewählt. Hierbei werden die Metalle Cr, Ni, Co und Legierungen hiervon bevorzugt für höhere Anwendungstemperaturbereiche der Verbundkeramik eingesetzt. Erfindungsgemäß können auch mehrere unterschiedliche Metalle oder Legierungen nacheinander abgeschieden werden. Das erfindungsgemäße Herstellungsverfahren der Metallabscheidung lässt es auch zu, die durch eine bestimmungsgemäße Anwendung der erfindungsgemäßen Verbundkeramik hervorgerufenen Risse auf einfache Weise in einem erneutem Abscheidungsschritt wieder zu verschließen. Hierdurch ist es möglich, die Lebensdauer der Verbundkeramik wesentlich zu verlängern.

In einer weiteren vorteilhaften Ausgestaltung der Erfindung wird die Metallschicht durch eine oder mehrere weitere Deckschichten aus Glas oder Keramik verstärkt. Um den Korrosionsschutz weiter zu verbessern, sollte dabei die erste metallische Schicht eine gute Haftung zu einer weiter obenliegenden nicht-oxidierenden Glas- oder Keramikschicht herstellen können.

In einer besonders zu bevorzugenden Anwendung der Erfindung wird das vorangehend beschriebene Verfahren für die Herstellung von Bremsscheiben, Bremsbelägen oder Kupplungsscheiben verwendet. Die Verschleißeigenschaften und der Abrieb von Bremsscheibe und Bremsbelag sind wesentlich durch die Materialzusammensetzung der Reibschicht der Bremsscheibe bestimmt. Hierbei zeichnen sich C/SiC-Bremsscheiben durch einen geringen Abrieb bei hohem Reibwert aus. Nachteilig ist der hierdurch hervorgerufene hohe Abrieb bei den Bremsbelägen. Eine deutliche Verbesserung des Reibverhaltens und ein geringerer Abrieb der Bremsbeläge kann durch die erfindungsgemäße Abscheidung eines Metalls zumindest im Randbereich des Materialgefüges der Bremsscheibe und/oder des Bremsbelages erreicht werden, wobei der Randbereich dann eine integrierte Reibschicht oder einen integrierten Reibbelag in einem ansonsten unverändert einstückigen Bauteil bildet. Alternativ kann das Metall insbesondere bei dünnen Bremsscheiben, Bremsbelägen oder Kupplungsscheiben unter Ausbildung eines Gefüges im wesentlichen oder vollständig über die gesamte Dicke der Verbundkeramik galvanisch abgeschieden werden.
Abhängig von der Art und Menge des abgeschiedenen Metalls und/oder von der Tiefe der Abscheidung kann dann der künftige Reibwert der in dem betreffenden tribologischen System eingesetzten Bauteile gezielt verändert werden. In tribologischen Systemen, wie Bremsscheiben, Kupplungen und Bremsbelägen wird als Metall bevorzugt Cu und seine Legierungen zur Einlagerung in das Keramikgefüge verwendet. Falls hingegen in bestimmten Abschnitten keine Einlagerung von Metallen stattfinden soll, so reicht es aus, diese Abschnitte vor dem Eintauschen in das Galvanikbad lediglich dicht abzudecken bzw. abzukleben. Vorzugsweise werden hierzu nichtleitende Lacke oder Wachse verwendet.

### Zeichnungen

Ein Ausführungsbeispiel der Erfindung ist in der Zeichnung dargestellt und in der nachfolgenden Beschreibung näher erläutert. In den Zeichnungen zeigt:
Fig.1 eine lichtmikroskopische Aufnahme eines Randbereiches des Gefüges einer nach dem erfindungsgemäßen Verfahren hergestellten Bremsscheibe;
Fig. 2 einen vergrößerten Ausschnitt von Fig.1;
Fig.3 ein Diagramm, in welchem die relative Masseänderung einer dünnen porösen C/SiC-Platte mit abgeschiedenem Cu gegenüber einer vergleichbaren Platte ohne Cu in Abhängigkeit von der Zeit dargestellt ist.

### Beschreibung des Ausführungsbeispiels:

Zur Herstellung einer Bremsscheibe mit Cu-Einlagerungen wurde eine durch Flüssigsilizieren eines CFC-Basiskörpers hergestellte Scheibe, gemäß dem Verfahren nach DE 197 10 105 A1 verwendet. Die silizierte Bremsscheibe mit einem Außenradius von 350 mm wurde getrocknet und entfettet und in ein Galvanikbad überführt. Das Galvanikbad bestand aus einer wässrigen 12,5%igen Cu(II)-Sulfatlösung. Zur Cu-Abscheidung wurde eine Gleichspannung angelegt, mit einer Stromdichte von 0,001 bis 0,03 A/cm². Die Cu-Abscheidung wurde nach ca. 2 Stunden beendet.

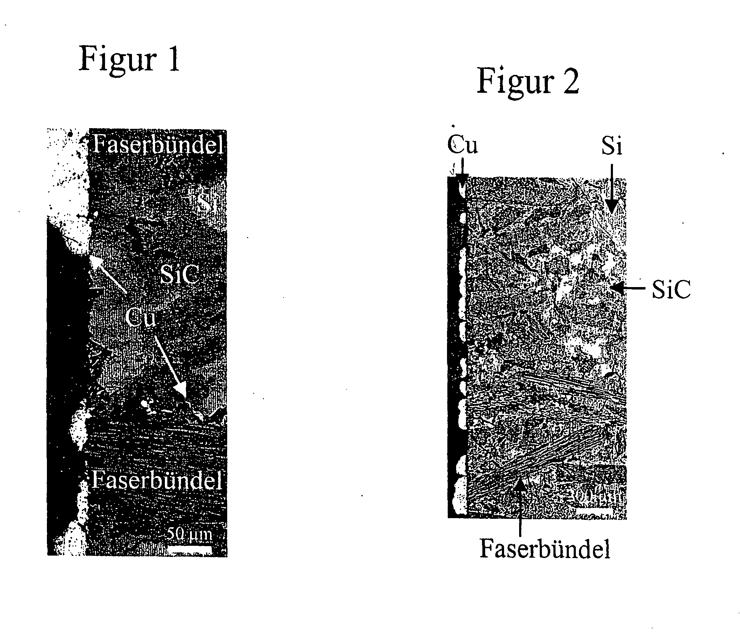

Die erfindungsgemäße Einlagerung von Cu in das Gefüge der Verbundkeramik der Bremsscheibe ist durch eine lichtmikroskopische Aufnahme, wie sie in Fig.1 gezeigt ist, leicht nachweisbar. Dort wird das abgeschiedene Cu durch weiße Felder veranschaulicht, während die Matrix der Verbundkeramik, in welcher kohlenstoffhaltige Fasern gebunden sind, durch Si und SiC-Felder gebildet wird, die durch unterschiedliche Grautönungen unterscheidbar sind. Wie dort und insbesondere durch den vergrößerten Ausschnitt gemäß Fig.2 zu erkennen ist, wurde Cu im gesamten Gefüge verteilt abgeschieden, vorzugsweise in Rissen und Poren im Bereich der Fasern.

Darüber hinaus wurde im vorliegenden Fall derart galvanisiert, dass sich auf der Reibfläche der Bremsscheibe zusätzlich eine Deckschicht aus metallischem Kupfer mit einer Dicke von ca. 10 µm ausbildete. Die auf der Reibfläche abgeschiedene Cu-Schicht wurde anschließend bei der Endbearbeitung der Scheibe mechanisch, insbesondere durch spanabhebende Verfahren, entfernt.

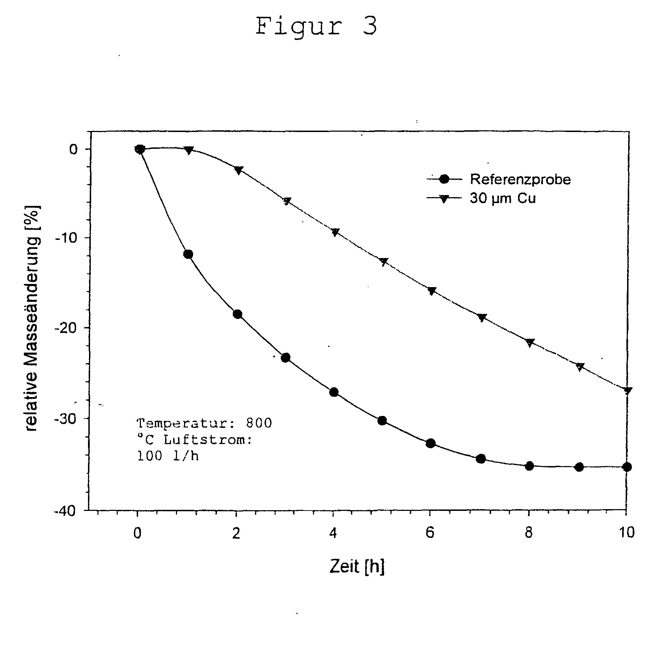

Eine dünne poröse C/SiC-Platte mit einer nach dem erfindungsgemäßen Verfahren allseitig abgeschiedenen Cu-Schicht einer Dicke von 30 µm zeigte bei Auslagerung an Luft bei 800°C in einem Luftstrom von 100l/h nach 1h einen Gewichtsverlust von 1-2%, wie aus Fig.3 hervorgeht. Demgegenüber wies eine Referenzprobe ohne Cu-Schicht 12% Gewichtsverlust auf.

## Patentansprüche

1. Verfahren zur Herstellung eines faserverstärkten Werkstoffs mit kohlenstoffhaltigen und/oder kohlenstoffbeschichteten Fasern, wobei zunächst ein poröser C/SiC-Verbundwerkstoff hergestellt wird durch
- Mischen von kohlenstoffhaltigen Fasern, Füllmitteln und/oder Bindemitteln
- Formgebung der Mischung unter Druck und/oder Temperatur
- Pyrolyse zu einem aus mit Fasern verstärkten Formkörper aus Kohlenstoff,
- Infiltrieren zumindest einer Randschicht dieses Formkörpers mit einer Silicium-Schmelze und partielle Reaktion des Kohlenstoffs des Formkörpers zu Siliciumcarbid, unter Bildung eines Formkörpers, der wenigstens in der Randschicht aus einer Verbundkeramik besteht mit in eine Matrix aus Siliciumcarbid, Silicium und Kohlenstoff eingebetteten kohlenstoffhaltigen Fasern,
**dadurch gekennzeichnet, daß** in einem folgenden Schritt wenigstens ein Metall zumindest in einem Teil der offenen Risse und/oder Poren der Matrix, vorzugsweise in unmittelbarer Nachbarschaft der Fasern, galvanisch abgeschieden wird.

2. Verfahren nach Anspruch 1, **dadurch gekennzeichnet, daß** die galvanische Abscheidung unter Einsatz von Gleichspannung erfolgt.

3. Verfahren nach Anspruch 1 oder 2, **dadurch gekennzeichnet, daß** das wenigstens eine Metall zumindest in einer Randschicht der Verbundkeramik abgeschieden wird.

4. Verfahren nach Anspruch 3, **dadurch gekennzeichnet, daß** die Abscheidung von Metall an den von einer Oberfläche der Verbundkeramik entfernt gelegenen Rissen oder Poren begonnen und nach dem Füllen der Poren und/oder Risse beendet oder fortgeführt wird, bis eine zusammenhängende, die gesamte Oberfläche der faserverstärkten Verbundkeramik bedeckende metallische Deckschicht ausbildet ist.

5. Verfahren nach Anspruch 4, **dadurch gekennzeichnet, daß** das wenigstens eine Metall im wesentlichen über die gesamte Dicke der faserverstärkten Verbundkeramik abgeschieden wird.

6. Verfahren nach Anspruch 4 oder 5, **dadurch gekennzeichnet, daß** auf die metallische Deckschicht der Verbundkeramik wenigstens eine weitere Schicht aus Glas oder Keramik aufgebracht wird.

7. Verfahren nach einem oder mehreren der vorhergehenden Ansprüche 1 bis 6, **dadurch gekennzeichnet, daß** wenigstens eine Metall, das galvanisch abgeschieden wird, ein Metall aus der Gruppe Ti, Cr, Mo, Fe, Co, Ni, Pd, Pt, Cu, Ag, Au, Zn und Sn oder eine Legierung enthaltend eines dieser Metalle ist.

8. Verfahren nach einem oder mehreren der vorhergehenden Ansprüche 1 bis 7, **dadurch gekennzeichnet, daß** als Fasern kohlenstoffhaltige Verstärkungsfasern, Kohlenstoffasern, Graphitfasern oder Fasern, die eines oder mehrere der Elemente Si, B, C, N, Ti, oder P enthalten, und/oder mit Kohlenstoff oder Graphit beschichtete Fasern verwendet werden.

9. Verfahren nach einem oder mehreren der vorhergehenden Ansprüche 1 bis 8, **dadurch gekennzeichnet, daß** die Fasern Keramikfasern sind, insbesondere solche auf der Basis von SiO₂, Al₂O₃, ZrO₂, oder SiC, die mit Kohlenstoff oder Graphit beschichtet sind.

10. Verfahren zur Nachbearbeitung eines Formkörpers, der nach dem Verfahren gemäß einem oder mehreren der Ansprüche 1 bis 9 hergestellt wurde, nach dessen Verwendung als Bremsscheibe, Bremsbelag oder Kupplungsscheibe, **dadurch gekennzeichnet, daß** wenigstens ein Metall zumindest in einem Teil der im Laufe der Verwendung gebildeten Risse galvanisch abgeschieden wird.

## Claims

1. A method of producing a fiber-reinforced material comprising carbon-containing and/or carbon-coated fibers wherein initially a porous C/SiC composite material is produced by
- mixing carbon-containing fibers, fillers and/or binders to obtain a mixture,
- molding the mixture under pressure and/or heat,
- pyrolyzing to obtain a fiber-reinforced molding composed of carbon,
- infiltrating at least a peripheral layer of this molding with a silicon melt and partially reacting the carbon of the molding to form silicon carbide to obtain a molding which consists at least in the peripheral layer of a composite ceramic comprising carbon-containing fibers embedded into a matrix of silicon carbide, silicon and carbon,
**characterized in that** in a subsequent step at least one metal is electrodeposited in all or some of the open cracks and/or pores in the matrix, preferably in the immediate vicinity of the fibers.

2. A method according to claim 1, **characterized in that** the electrodepositing is effected using direct current voltage.

3. A method according to claim 1 or 2, **characterized in that** the at least one metal is deposited at least in a peripheral layer of the composite ceramic.

4. A method according to claim 3, **characterized in that** the depositing of metal is commenced at the cracks or pores remote from a surface of the composite ceramic and ended after the filling of the pores and/or cracks or continued after the filling of the pores and/or cracks until a coherent metallic covering layer over the entire surface of the fiber-reinforced composite ceramic has formed.

5. A method according to claim 4, **characterized in that** the at least one metal is deposited substantially throughout the entire thickness of the fiber-reinforced composite ceramic.

6. A method according to claim 4 or 5, **characterized in that** at least one further layer of glass or ceramic is applied atop the metallic covering layer on the composite ceramic.

7. A method according to one or more of the preceding claims 1 to 6, **characterized in that** at least one metal electrodeposited is a metal from the group consisting of Ti, Cr, Mo, Fe, Co, Ni, Pd, Pt, Cu, Ag, Au, Zn and Sn, or an alloy containing one of these metals.

8. A method according to one or more of the preceding claims 1 to 7**, characterized in that** carbon-containing reinforcing fibers, carbon fibers, graphite fibers or fibers containing one or more of the elements Si, B, C, N, Ti or P, and/or carbon- or graphite-coated fibers are used.

9. A method according to one or more of the preceding claims 1 to 8, **characterized in that** the fibers are ceramic fibers, in particular ceramic fibers based on SiO₂, Al₂O₃, ZrO₂ or SiC, which are carbon or graphite coated.

10. A method of revamping a molding produced by the method according to one or more of claims 1 to 9 following its use as a brake disk, brake lining or clutch plate, **characterized in that** at least one metal is electrodeposited in all or some of the cracks formed in the course of use.

## Revendications

1. Procédé de production d'un matériau renforcé par des fibres, comportant des fibres contenant du carbone et/ou revêtues par du carbone, un matériau composite de C/SiC poreux étant tout d'abord produit par
- mélange de fibres contenant du carbone, d'agents de remplissage et/ou d'agents liants,
- mise en forme du mélange sous pression et/ou température
- pyrolyse donnant un corps moulé en carbone renforcé par des fibres,
- infiltration dans au moins une couche périphérique de ce corps moulé, d'une masse fondue de silicium et réaction partielle du carbone du corps moulé en carbure de silicium, en formant un corps moulé qui est constitué au moins dans la couche périphérique, d'une céramique composite comprenant des fibres contenant du carbone incorporées dans une matrice de carbure de silicium, de silicium et de carbone,
**caractérisé en ce que,** dans une étape suivante, au moins un métal est déposé par galvanisation au moins dans une partie des fissures ouvertes et/ou des pores de la matrice, de préférence à proximité immédiate des fibres.

2. Procédé selon la revendication 1, **caractérisé en ce que** le dépôt par galvanisation s'effectue en appliquant une tension continue.

3. Procédé selon la revendication 1 ou 2, **caractérisé en ce qu'**au moins un métal est déposé au moins dans une couche périphérique de la céramique composite.

4. Procédé selon la revendication 3, **caractérisé en ce que** le dépôt de métal débute dans les fissures ou les pores à distance de la surface de la céramique composite et se termine ou se poursuit après le remplissage des pores et/ou des fissures jusqu'à qu'une couche de revêtement métallique recouvrant la surface totale de la céramique composite renforcée par des fibres soit formée.

5. Procédé selon la revendication 4, **caractérisé en ce qu'**au moins un métal est déposé essentiellement sur l'épaisseur complète de la céramique composite renforcée par des fibres.

6. Procédé selon la revendication 4 ou 5, **caractérisé en ce qu'**au moins une autre couche de verre ou de céramique est déposée sur la couche de revêtement métallique de la céramique composite.

7. Procédé selon une ou plusieurs des revendications 1 à 6 précédentes, **caractérisé en ce qu'**au moins un métal qui est déposé par galvanisation, est un métal du groupe Ti, Cr, Mo, Fe, Co, Ni, Pd, Pt, Cu, Ag, Au, Zn et Sn ou un alliage contenant l'un de ces métaux.

8. Procédé selon une ou plusieurs des revendications 1 à 7 précédentes, **caractérisé en ce qu'** on utilise en tant que fibres, des fibres de renforcement contenant du carbone, des fibres de carbone, des fibres de graphite ou des fibres qui contiennent un ou plusieurs des éléments Si, B, C, N, Ti ou P, et/ou des couches revêtues avec du carbone ou du graphite.

9. Procédé selon une ou plusieurs des revendications 1 à 8 précédentes**, caractérisé en ce que** les fibres sont des fibres de céramique, en particulier, des fibres à base de SiO₂, Al₂O₃, ZrO₂ ou SiC qui sont revêtues de carbone ou de graphite.

10. Procédé de façonnage d'un corps moulé qui a été produit selon le procédé selon l'une ou plusieurs des revendications 1 à 9, son utilisation en tant que disque de frein, plaquettes de frein ou disque d'embrayage, **caractérisé en ce qu'**au moins un métal est déposé par galvanisation au moins dans une partie des fissures formées au cours de l'utilisation.
